# EUROPÄISCHE PATENTSCHRIFT

(11) **EP 1 168 027 B1**
(45) Veröffentlichungstag und Bekanntmachung des Hinweises auf die Patenterteilung: **13.10.2004**
(21) Anmeldenummer: 01114634.7
(22) Anmeldetag: 19.06.2001
(51) Int. Cl.: G02B 7/14, G02B 7/16, G02B 21/24, B25J 7/00

(54) **Vorrichtung zum Objektivwechsel und Mikroskop mit Vorrichtung zum Objektivwechsel**
Device for changing an objective and microscope using the same
Dispositif changeur d'objectif et microscope utilisant un tel dispositif

(30) Priorität: 29.06.2000 DE 10031720
(43) Veröffentlichungstag der Anmeldung: 02.01.2002
(73) Patentinhaber: Leica Microsystems Heidelberg GmbH, 68165 Mannheim (DE)
(72) Erfinder: Engelhardt, Johann, Dr., 76669 Bad Schönborn (DE)
(74) Vertreter: Reichert, Werner F., Dr.

(56) Entgegenhaltungen:
- WO-A-98/14816
- DE-A- 19 834 829
- FR-A- 1 197 952
- US-A- 2 857 808
- US-A- 4 762 405

## Beschreibung

Die Erfindung betrifft ein Mikroskop mit einer Vorrichtung zum Objektivwechsel betrifft. Das Mikroskop kann als Scanmikroskop oder auch als konfokales Mikroskop ausgestaltet sein.

Mikroskope sind aus dem Stand der Technik hinlänglich bekannt. In der Regel wird der Objektivwechsel mittels eines Revolvers durchgeführt.

Die französische Druckschrift FR 1.197.952 offenbart eine Vorrichtung zum mikroskopischen Beobachten einer Probe, die in einer Kammer angeordnet ist. Die Vorrichtung ist zu Fernbedienung ausgestaltet, so dass auch die Objektive motorisch gewechselt werden können. Unterhalb des Mikroskoptisches ist das Objektiv in der Arbeitsposition angeordnet. Ebenso ist zumindest auf gleichem Niveau auch ein Objektiworrat vorgesehen. Im Objektivvorrat sind die Objektive jeweils einzeln befestigt. Ein Lagefixierung der Objektive in der optischen Achse durch ein Halteelement ist nicht vorgesehen.

Die Europäische Patentanmeldung EP-A-0 124 980 offenbart ein inverses Mikroskop, bei dem der Revolver unter der zu beobachtenden Probe sitzt. Der Vorteil der inversen Mikroskopbauweise ist, dass beim Objektivwechsel der Revolver den Raum über bzw. neben der Probe nicht stört. Das Einschwenken der auf dem Revolver angeordneten Objektive beansprucht einen gewissen Bewegungsraum. Das inverse Mikroskop hat den Nachteil, dass bei der Beobachtung und der Manipulation einer Probe, immer durch eine Glasplatte beobachtet werden muss. Ferner ist die Verwendung einer Auflichtbeleuchtung schwieriger, da nicht selten die Immersionsflüssigkeit in die Optik eindringt. Die deutsche Offenlegungsschrift DE-A-29 22 212 offenbart ein Mikroskop mit zugeordneten Mikromanipulator. Die Spitze des Manipulators berührt die zu untersuchende Probe und befindet sich bei großer Vergrößerung sehr nahe am Objektiv. Stellt man sich vor, dass nicht nur ein Manipulator sondern mehrere und dazu noch von beiden Seiten auf die zu untersuchende Probe einwirken, so ist es leicht vorstellbar, dass bei unachtsamen Objektivwechsel bei einem aufrechten Mikroskop die Manipulatoren beschädigt werden können. Um eine Beschädigung zu vermeiden müssen für den Objektivwechsel die Manipulatoren entfernt und nach dem Wechsel wieder neu ausgerichtet werden. Dies ist zeitraubend und uneffektiv.

Aus der deutschen Offenlegungsschrift DE-A-198 34 829 ist ein Mikroskop offenbart, das einen Revolver zum Wechseln der Objektive besitzt. Der Revolver ist derart ausgestaltet, dass die einzelnen am Revolver angebrachten Objektive mit ihrer optischen Achse senkrecht zur Drehachse des Revolvers angeordnet sind. Die Drehachse des Revolvers ist zumindest zum Teil Bestandteil des optischen Strahlengangs. Im Bereich der Probe benötigt das ein- bzw. ausschwenkende Objektiv in der x-z-Ebene ausreichend Platz. Anordnungen zur Probenmanipulation können in diesem Bereich nicht vorgesehen werden, denn die Gefahr der Beschädigung ist zu groß.

Der Erfindung liegt die Aufgabe zugrunde ein Mikroskop zu schaffen beim dem der Objektivwechsel derart durchgeführt wird, dass eine möglichst geringe Beeinflussung bzw. Einschränkung des Bereiches um die zu untersuchende Probe herum erfolgt. Beschädigungen oder Neujustagen von Manipulatoren durch den Objektivwechsel sollen vermieden werden.

Die objektive Aufgabe wird gelöst durch ein Mikroskop, das die Merkmale des Anspruchs 1 umfasst.

Ein Vorteil der Erfindung ist, dass beim Objektivwechsel der Raum um ein in der Objektivsollposition befindliches Objektiv kaum beeinflusst wird. Müssen die auf eine Probe einwirkenden Manipulatoren (Mikrowerkzeuge, Mikropipetten, Mikroelektroden, Mikronadeln) lediglich einmal auf die Probe eingestellt und justiert werden. Der Objektivwechsel in die Objektivsollposition, die durch ein Halteelement festlegt ist, erfolgt derart, dass die Längsachse des Objektivs beim Objektivwechsel im Bereich des Halteelements im Wesentlichen koaxial zur optischen Achse des Objektivs bewegbar ist.

Da ein herkömmlicher Revolver, durch die Schwenkbewegung in die nächste Objektivsollposition, um die Objektivsollposition erheblichen Raum beansprucht, besteht die Gefahr, dass die Manipulatoren beschädigt werden. Die Erfindungsgemäße Vorrichtung hat ferner den Vorteil, dass beim Objektivwechsel lateral um die Objektivsollposition herum wenig Raum beansprucht wird. Die Manipulatoren müssen beim Objektivwechsel nicht mehr von der Probe entfernt und anschließend neu justiert werden. Die aufwendige, Zeit raubende und Produktivität hemmende Justierung kann durch die Erfindung vermieden werden.

Ein Mikroskop, das die erfindungsgemäße Vorrichtung verwendet, ist derart ausgestaltet, dass das Stativ mindestens eine Öffnung ausgebildet hat, durch die hindurch mindestens ein Objektiv von der Objektivspeicherposition in die Objektivsollposition bewegbar ist. Ferner ist von Vorteil, dass der Stativbereich des objektivseitigen Strahlenganges (der Mikroskopkopf) unwesentlich breiter ist, als der Durchmesser des Objektivs. Somit wird für die Vielzahl der auf die Probe einwirkenden Manipulatoren ausreichend Platz für deren Anordnung geschaffen. Dies alles zusammen bewirkt, dass die auf die zu untersuchende Probe einwirkenden Mikromanipulatoren beim Objektivwechsel in ihrer vorbestimmten Position verbleiben.

Hinzu kommt, dass das Mikroskop als ein Scan-Mikroskop ist oder ein konfokales Scan-Mikroskop ausgestaltet sein kann.

In der Zeichnung ist der Erfindungsgegenstand schematisch dargestellt und wird anhand der Figuren nachfolgend beschrieben. Dabei zeigen:
- Fig. 1: ein Ausführungsbeispiel, bei dem die zu wechselnden Objektive entlang einer Kurve bewegbar sind,
- Fig. 2: ein Ausführungsbeispiel, bei dem die Objektive mittels eines Roboterarms in die Objektivsollposition verbracht werden,
- Fig. 3: eine Seitenansicht einer Realisierungsmöglichkeit, bei dem die Objektive durch eine Linearbewegung in den Strahlengang des Mikroskops bewegt werden, und
- Fig. 4: eine andere Ansicht der Fig.3, die die Anordnung des Objektivvorrats bezüglich des Mikroskops zeigt.

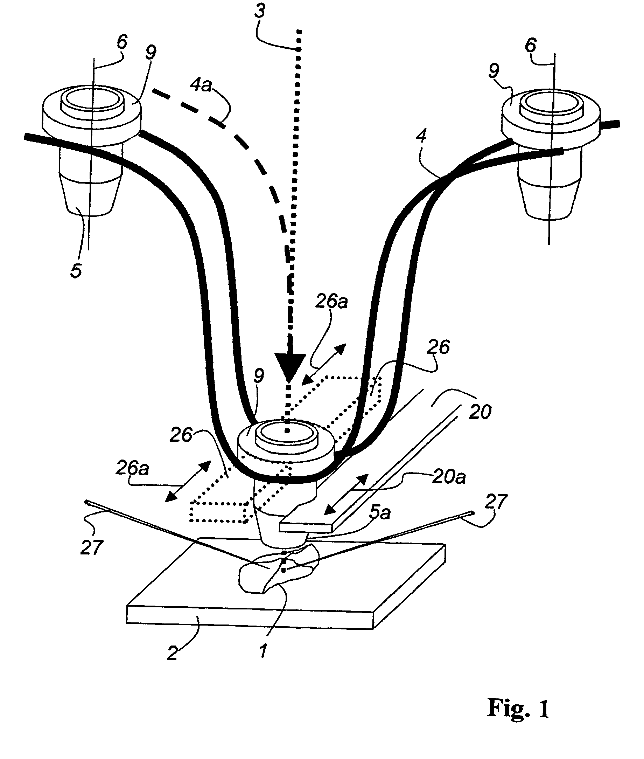

Fig. 1 zeigt den Objektivwechsel von mindestens einem Objektiv 5 in eine Objektivsollposition 5a. Jedes Objektiv 5 definiert eine Längsachse 6, die mit einer durch das Mikroskop definierten optischen Achse 3 zusammenfällt wenn das Objektiv 5 in der Objektivsollposition 5a ist. Auf den Aufbau eines Mikroskops braucht hier nicht näher eingegangen werden, da dieser eine Fachmann hinlänglich bekannt sein dürfte. Die nachfolgende Beschreibung der Erfindung nimmt bezug auf ein Mikroskop. Dies soll jedoch nicht als Beschränkung der Erfindung verstanden werden. Selbstverständlich können die verschiedenen Ausführungsformen der Vorrichtungen zum Objektivwechsel auch bei anderen Systemen verwendet werden, die um das Objektiv herum räumlich in ihrer Bewegungsfreiheit eingeschränkt sind. Die Objektive 5 sind in der Objektivsollposition 5a derart angeordnet, dass sie einer auf einem Probentisch oder einem Objektträger 2 angeordneten Probe 1 gegenüberliegen. Die Objektive 5 werden in diesem Ausführungsbeispiel durch eine Kurve 4 von einer Objektivspeicherposition (nicht dargestellt) in die Objektivsollposition 5a überführt. Eine mögliche Bewegungsrichtung ist durch einer Pfeil 4a angedeutet. Die Kurve 4 kann z.B. aus einem Metallband gebildet sein, durch das die daran befestigbaren Objektive 5 in die Objektivsollposition 5a gebracht werden. Das Metallband wird in entsprechender Weise geführt, damit es der Form der Kurve folgt. Die Kurve 4 kann auch als Kurvenelement bezeichnet sein. Die Objektivsollposition 5a ist durch einen Anschlag 20 festgelegt, an den das Objektiv 5 bei Erreichen der Objektivsollposition 5a anliegt. Der Anschlag 20 ist, wie durch den Pfeil 20a angedeutet, in Richtung des Pfeils 20a bewegbar. Somit ist eine ungehinderte Bewegung der Objektive 5 von der Objektivspeicherposition in die Objektivsollposition 5a gewährleistet. Das Objektiv 5 ist mit einem Führungselement 9 versehen, das zum einem als eine Transportführung dient und zum anderen mit einem zweigeteilten Halteelement 26 zusammenwirkt. Jeder Teil des Halteelements 26 ist entsprechend der in Fig. 1 dargestellten Pfeile 26a bewegbar, um eine ungehinderte Bewegung des Objektivs 5 in die Objektivsollposition 5a zu ermöglichen. Befindet sich das Objektiv 5 in der Objektivsollposition 5a so bewegen sich die Teile des Halteelements 26 aufeinander zu und fixieren das Objektiv 5 in der Objektivsollposition 5a. In der Objektivsollposition 5a ist die optische Achse 3 koaxial mit der Längsachse 6 des Objektivs 5. Das Halteelement 26 und der Anschlag sind 20 derart angeordnet oder ausgestaltet, dass sie die Positionierung und/oder Justierung von Mikromanipulatoren 27 nicht stört. Die Mikromanipulatoren 27 werden zum mechanischen, elektrischen oder chemischen Beeinflussen der Probe 1 verwendet.

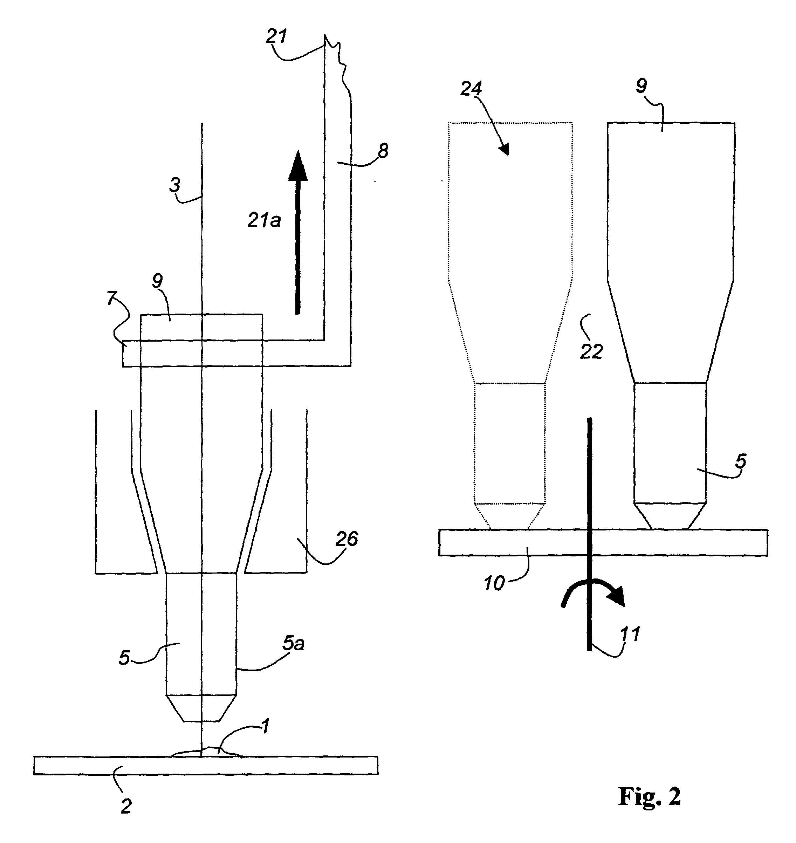

Das in Fig. 2 dargestellte Ausführungsbeispiel, stellt einen Roboterarm 21 dar mit dessen Hilfe die Objektive 5 von der Objektivspeicherposition 22 in die Objektivsollposition 5a verbracht werden. In dem hier dargestellten Ausführungsbeispiel sind die Objektive in ihrer Objektivspeicherposition 22 auf einem Magazinrevolver 10 angeordnet. Der Magazinrevolver 10 ist um eine Drehachse 11 drehbar, damit die Objektive in eine Entnahme- bzw. Ablegeposition 24 bewegbar sind. Das Objektiv 5 selbst ist mit einem Führungselement 9 versehen, das mit einem Halteelement 26 zusammenwirkt, um somit das Objektiv 5 in der Sollposition 5a festzulegen und/oder zu fixieren. Der Roboterarm 21 besteht aus einem Greifarm 7 und einem Schwenkarm 8. Für den Transport der Objektive 5 von der Objektivspeicherposition 22 in die Objektivsollposition 5a, faßt der Greifarm das am Objektiv 5 befestigte Führungselement 9. Mittels des Schwenkarms 8 kann das so gefasste Objektiv 5 in den Bereich der Objektivsollposition 5a verbracht werden. Greifarm 7 kann dann das Objektiv 5 freigeben damit es durch Führungselement 9 und Halteelement 26 entsprechend bezüglich der optischen Achse 3 positioniert wird. Es ist ebenso vorstellbar, dass der Greifarm 7 des Roboterarms 21 gleichzeitig als Objektivfixierung dient, die das Objektiv 5 in entsprechender Weise in der optischen Achse 3 positioniert. Der Pfeil 21a zeigt die Bewegungsrichtung des Roboterarms 21 bei der Entnahme des Objektivs 5 aus dem Halteelement 26.

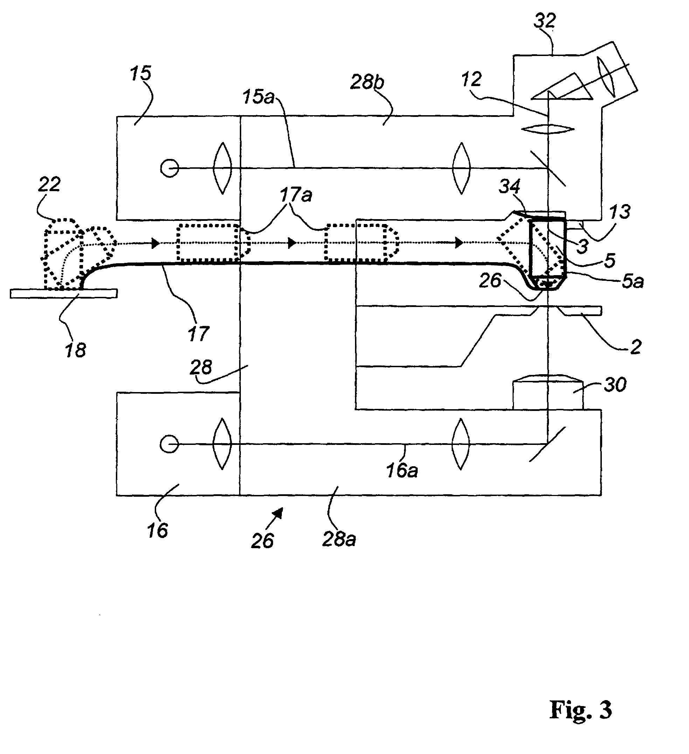

Fig. 3 zeigt eine weitere Realisierungsmöglichkeit. Die Vorrichtung zum Objektivwechsel ist zusammen mit einem Mikroskop 26 dargestellt. Das Mikroskop 26 besteht aus einem Stativ 28, das aus einem Fußteil 28a und einer Mikroskopkopf 28b besteht. Am Fußteil 28a ist eine Durchlichtbeleuchtung 16 und am Mikroskopkopf 28b ist eine Auflichtbeleuchtung 15 vorgesehen. Die Probe (nicht dargestellt) kann auf den Probentisch 2 gelegt werden. Das Licht von der Durchlichtbeleuchtung 16 über einen Kondensor 30 auf die Probe gerichtet und ein Durchlichtstrahlengang 16a definiert. Das Licht von der Auflichtbeleuchtung 15 gelangt über das Objektiv 5 auf die Probe und definiert einen Auflichtstrahlengang 15a. Am Mikroskopkopf 28b ist ein Tubus 32 vorgesehen, der einer Beobachtungsstrahlengang 12 definiert, der mit der optischen Achse 3 der Objektivs 5 zusammenfällt. Eine Vorrichtung zur Zuführung von mindestens einem Objektiv 5 von einer Objektivspeicherposition 22 in eine Objektivsollposition 5a. Die Objektivspeicherposition 22 ist im diesem Ausführungsbeispiel durch ein Magazin 18 bestimmt. Das Magazin 18 kann mehrere Objektive aufnehmen. Die Vorrichtung zur Zuführung umfasst eine Führungsschiene 17, auf der das einzusetzende Objektiv 5 zur bzw. von der Objektivsollposition 5a bewegbar ist. Das Objektiv 5 ist während der einzelnen Transportphasen 17a gestrichelt dargestellt. Befindet sich das gewünschte Objektiv 5 in der Entnahmeposition, wird es durch geeignete mechanische Mittel (nicht dargestellt) auf die Führungsschiene 17 positioniert. Auf der Führungsschiene 17 wird das Objektiv 5 dann in die Objektivsollposition 5a transportiert. Die Objektivsollposition 5a ist durch einen Anschlag 13 begrenzt. Am Mikroskopkopf 28b ist im Bereich der Objektivsollposition ein Federelement 34 vorgesehen, das das Objektiv 5 zur Fixierung in der optischen Achse 3 in ein Halteelement 26 drückt. Die Führungsschiene 17 kann derart angeordnet sein, dass sie durch das Stativ 28 hindurch führt. Dazu sind im Stativ 28 entsprechende Öffnungen oder Freisparungen (nicht dargestellt) vorgesehen, die für den Transport der Objektive 5 genügend Platz lassen.

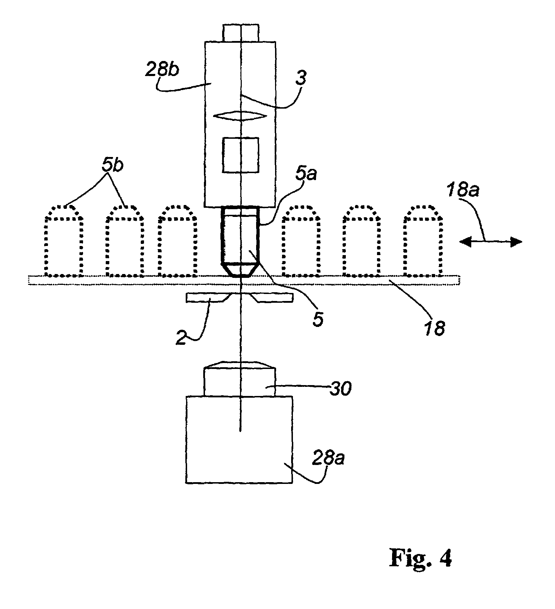

Fig. 4 zeigt eine Frontansicht des Mikroskops. Dabei sind nur die wesentlichen Teile aus Gründen der Übersichtlichkeit dargestellt. Der Mikroskopkopf 28b und das Fußteil 28a stellen den Vordergrund der Ansicht dar. Das Magazin 18 befindet sich im Hintergrund uns ist folglich gestrichelt dargestellt. Das in der Objektivsollposition 5a befindliche Objektiv 5 definiert die optische Achse 3, die sich im Mikroskopkopf 28b und im Kondensor 30 fortsetzt. Die Objektivsollposition 5a ist über dem Probentisch 2 vorgesehen. Das Magazin 18 ist linear und senkrecht zur optischen Achse 3 verfahrbar (dargestellt durch den Doppelpfeil 18a), um die für die Untersuchung gewünschten Objektive in eine Position zu bringen, damit sie von der Führungsschiene 17 (siehe Fig. 3) in die Objektivsollposition 5a transportiert werden. Die Objektive 5b im Magazin 18 sind durch dicke gestichelte Linien dargestellt. Die Lage der Objektive 5b im Magazin 18 soll lediglich ein Beispiel einer möglichen Lagerung darstellen und ist in keiner Weise als Beschränkung aufzufassen.

Allen, in Fig. 1 bis Fig. 2 dargestellten Ausführungsbeispielen ist gemeinsam, dass ein Halteelement die Objektivsollposition festlegt bzw. das Objektiv 5 in der Objektivsollposition 5a fixiert. Ferner bewegt sich die Längsachse 6 des Objektivs 5 beim Objektivwechsel im Bereich des Halteelements 26 im Wesentlichen koaxial zur optischen Achse 3. Dabei ist es egal aus welcher räumlichen Ausgangslage die Objektive 5 in die Objektivsollposition 5a gebracht werden.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Probe
- 2: Probentisch oder Objektträger
- 3: optisches Bauelement
- 4: Kurve
- 4a: Pfeil
- 5: Objektiv
- 5a: Objektivsollposition
- 5b: Objektive im Magazin
- 6: Längsachse
- 7: Greifarm
- 8: Schwenkarm
- 9: Führungselement
- 10: Magazinrevolver
- 11: Drehachse
- 13: Anschlag
- 15: Auflichtbeleuchtung
- 15a: Auflichtstrahlengang
- 16: Durchlichtbeleuchtung
- 16a: Durchlichtstrahlengang
- 17: Führungsschiene
- 17a: Transportphasen
- 18: Magazin
- 18a: Doppelpfeil
- 20: Anschlag
- 21: Roboterarm
- 21a: Pfeil (Bewegungsrichtung)
- 22: Objektivspeicherposition
- 24: Entnahme- bzw. Ablegeposition
- 26: Halteelement
- 26a: Pfeile (Bewegungsrichtung)
- 27: Mikromanipulatoren
- 28: Stativ
- 28a: Fußteil
- 28b: Mikroskopkopf
- 30: Kondensor
- 32: Tubus
- 34: Federelement

## Patentansprüche

1. Mikroskop, das eine optische Achse (3) definiert und mit einer Vorrichtung zum Objektivwechsel ausgestattet ist, wobei die Vorrichtung einen Vorrat von mindestens einem Objektiv (5), das eine Längsachse (6) definiert, aufweist und wobei die Vorrichtung eine Objektivspeicherposition (22) und eine Objektivsollposition (5a) definiert und dass mechanische Mittel vorgesehen sind, die mindestens ein Objektiv (5) von der Objektivspeicherposition (22) in die Objektivsollposition (5a) transportieren, **dadurch gekennzeichnet, dass** die Objektivsollposition (5a) durch ein Halteelement (26) festgelegt ist derart dass die Längsachse (6) eines sich in der durch das Halteelement (26) und Führungselement (9) festgelegten Objektivsollposition (5a) befindlichen Objektivs (5) mit der optischen Achse (3) des Mikroskops zusammenfällt.

2. Mikroskop nach Anspruch 1, **dadurch gekennzeichnet, dass** das Mikroskop einen Probentisch (2) zum Tragen einer Probe (1) aufweist und dass der Probe (1) mindestens ein Mikromanipulator (27) zugeordnet ist, der beim Objektivwechsel in der vorbestimmten Position verbleibt.

3. Mikroskop nach Anspruch 1, **dadurch gekennzeichnet, dass** die Objektivsollposition (5a) einen Anschlag (13) aufweist und dass das am Anschlag (13) anliegende Objektiv mittels eines Federelements (34) im Halteelement (26) fixierbar ist.

4. Mikroskop nach Anspruch 1, **dadurch gekennzeichnet, dass** die mechanischen Mittel ein Kurvenelement umfassen entlang dessen der Objektivwechsel erfolgt.

5. Mikroskop nach Anspruch 4, **dadurch gekennzeichnet, dass** das Objektiv (5) durch das Kurvenelement von der Objektivspeicherposition (22) in die Objektivsollposition (5a) transportierbar ist, und dass das kurvenelement durch ein Metallband gebildet ist.

6. Mikroskop nach Anspruch 1, **dadurch gekennzeichnet, dass** die mechanischen Mittel einen Roboterarm (21) umfassen, der das Objektiv (5) aus der Objektivspeicherposition (22) in die Objektivsollposition (5a) überführt.

7. Mikroskop nach einem der Ansprüche 1 bis 6 , **dadurch gekennzeichnet, dass** das Mikroskop ein Scan-Mikroskop ist.

8. Mikroskop nach Anspruch 7, **dadurch gekennzeichnet, dass** das Mikroskop ein konfokales Scan-Mikroskop ist.

## Claims

1. Microscope which defines an optical axis (3) and is equipped with a device for changing an objective, the device having a supply of at least one objective (5), which defines a longitudinal axis (6), and the device defining an objective storage position (22) and a desired objective position (5a), and mechanical means being provided that transport at least one objective (5) from the objective storage position (22) into the desired objective position (5a), **characterized in that** the desired objective position (5a) is fixed by a holding element (26) and a guide element fitted on the objective (5) in such a way that the longitudinal axis (6) of an objective (5) located in the desired objective position (5a) fixed by the holding element (26) and guide element (9) coincides with the optical axis (3) of the microscope.

2. Microscope according to Claim 1, **characterized in that** the microscope has a specimen stage (2) for supporting a specimen (1), and **in that** the specimen (1) is assigned at least one micromanipulator (27) which remains in the predetermined position during changing of the objective.

3. Microscope according to Claim 1, **characterized in that** the desired objective position (5a) has a stop (13), and **in that** the objective bearing against the stop (13) can be fixed by means of a spring element (34) in the holding element (26).

4. Microscope according to Claim 1, **characterized in that** the mechanical means comprise a curved element along which the change of objective is performed.

5. Microscope according to Claim 4, **characterized in that** the objective (5) can be transported by the curved element from the objective storage position (22) into the desired objective position (5a), and **in that** the curved element is formed by a metal strip.

6. Microscope according to Claim 1, **characterized in that** the mechanical means comprise a robot arm (21) which transfers the objective (5) from the objective storage position (22) into the desired objective position (5a).

7. Microscope according to one of Claims 1 to 6, **characterized in that** the microscope is a scanning microscope.

8. Microscope according to Claim 7, **characterized in that** the microscope is a confocal scanning microscope.

## Revendications

1. Microscope qui définit un axe optique (3) et qui est équipé d'un dispositif de changement d'objectif, le dispositif présentant une réserve comprenant au moins un objectif (5) qui définit un axe longitudinal (6) et le dispositif définissant une position de mise en réserve d'objectif (22) et une position voulue d'objectif (5a) et des moyens mécaniques étant prévus qui transportent au moins un objectif (5) de la position de mise en réserve d'objectif (22) vers la position voulue d'objectif (5a), **caractérisé en ce que** la position voulue d'objectif (5a) est définie par un élément de maintien (26) de telle manière que l'axe longitudinal (6) d'un objectif (5) qui se trouve dans la position voulue d'objectif (5a) définie par l'élément de maintien (26) et l'élément de guidage (9) coïncide avec l'axe optique (3) du microscope.

2. Microscope selon la revendication 1, **caractérisé en ce que** le microscope présente un plateau à échantillon (2) destiné à porter un échantillon (1) et que l'échantillon (1) est associé à au moins un micro-manipulateur (27) qui demeure dans la position prédéfinie lors d'un changement d'objectif.

3. Microscope selon la revendication 1, **caractérisé en ce que** la position voulue d'objectif (5a) présente une butée (13) et que l'objectif qui repose contre la butée (13) peut être fixé dans l'élément de maintien (26) à l'aide d'un élément ressort (34).

4. Microscope selon la revendication 1, **caractérisé en ce que** les moyens mécaniques comprennent un élément courbe le long duquel s'effectue le changement d'objectif.

5. Microscope selon la revendication 4, **caractérisé en ce que** l'objectif (5) peut être transporté de la position de mise en réserve d'objectif (22) vers la position voulue d'objectif (5a) par l'élément courbe et que l'élément courbe est constitué d'une bande de métal.

6. Microscope selon la revendication 1, **caractérisé en ce que** les moyens mécaniques comprennent un bras de robot (21) qui fait passer l'objectif (5) de la position de mise en réserve d'objectif (22) vers la position voulue d'objectif (5a).

7. Microscope selon l'une des revendications 1 à 6, **caractérisé en ce que** le microscope est un microscope à balayage.

8. Microscope selon la revendication 7, **caractérisé en ce que** le microscope est un microscope à balayage à foyer commun.
